# EUROPÄISCHE PATENTSCHRIFT

(11) **EP 1 034 611 B1**
(45) Veröffentlichungstag und Bekanntmachung des Hinweises auf die Patenterteilung: **18.09.2002**
(21) Anmeldenummer: 98961051.4
(22) Anmeldetag: 27.10.1998
(51) Int. Cl.: H02M 3/158

(54) **DROSSELWANDLER**
CONSTANT CURRENT TRANSFORMER
TRANSFORMATEUR A COURANTS CONSTANTS

(30) Priorität: 03.11.1997 DE 19748521
(43) Veröffentlichungstag der Anmeldung: 13.09.2000
(73) Patentinhaber: SIEMENS AKTIENGESELLSCHAFT, 80333 München (DE)
(72) Erfinder: SWART, Marten, D-93083 Obertraubling (DE); BELAU, Horst, D-84085 Langquaid (DE); WAGNER, Ekkehart-Peter, D-93077 Bad Abbach (DE)
(86) Internationale Anmeldenummer: DE9803141
(87) Internationale Veröffentlichungsnummer: WO99023746

(56) Entgegenhaltungen:
- EP-A- 0 319 269
- DE-A- 19 603 823
- US-A- 5 552 694

## Beschreibung

Die Erfindung betrifft einen Drosselwandler mit den Merkmalen des Anspruchs 1 und Verfahren zu seinem Betrieb.

Drosselwandler nutzen den Effekt, daß bei Anlegen einer Gleichspannung an eine Drossel der sie durchfließende Strom in erster Näherung mit der Zeit linear ansteigt. Wird die Spannung an der Drossel getaktet, so ergibt sich eine bestimmte Ausgangsspannung. Die Variation des Tastverhältnisses ermöglicht eine Variation der Ausgangsspannung bei vorgegebener Eingangsspannung.

Bekannt sind Aufwärtsregler, bei denen die Ausgangsspannung größer als die Eingangsspannung sein kann, und Abwärtsregler, bei denen die Ausgangsspannung kleiner als die Eingangsspannung sein kann.

Solche Aufwärts- und Abwärtsregler sind aus Stengl/Tihanyi "Leistungs-MOS-FET-Praxis", Pflaum Verlag München, 1992, S. 176-177, bekannt. Sowohl für einen Aufwärts-, als auch für einen Abwärtsregler ist jeweils eine eigene Drossel erforderlich.

Aus US 5,552,694 ist ein Drosselwandler mit einer Drossel bekannt, der entweder als Aufwärts- oder als Abwärtswandler betrieben werden kann.

Der vorliegenden Erfindung liegt die Aufgabe zugrunde, eine Schaltung für einen Drosselwandler anzugeben, der mittels einer einzigen Drossel sowohl als Aufwärts- als auch als Abwärtsregler betrieben werden kann und aus einer einzigen Spannungsquelle zwei Spannungen erzeugt, von denen die eine größer und die andere kleiner als die Eingangsspannung sein kann.

Diese Aufgabe wird durch die Merkmale des Anspruchs 1 gelöst. Bei dem erfindungsgemäßen Drosselwandler ist sichergestellt, daß, solange die Versorgungsspannung zur Verfügung steht, sowohl die für die kleinere Spannung als auch die für die größere Spannung benötigte Energie direkt der Versorgungsspannungsquelle entnommen wird. Nach einem evtl. Wegfall der Versorgungsspannungsquelle (Autarkiezeitfall) wird die Ansteuerung der elektronischen Schaltelemente so umgestellt, daß für eine gewisse Zeit beide Spannungen erhalten bleiben, wobei die Energie für die kleinere der beiden Spannungen einem der größeren Spannung zugeordneten Energiespeicher entnommen werden kann.

Weitere vorteilhafte Ausgestaltungen der Erfindung ergeben sich aus den Verfahrens- und Unteransprüchen.

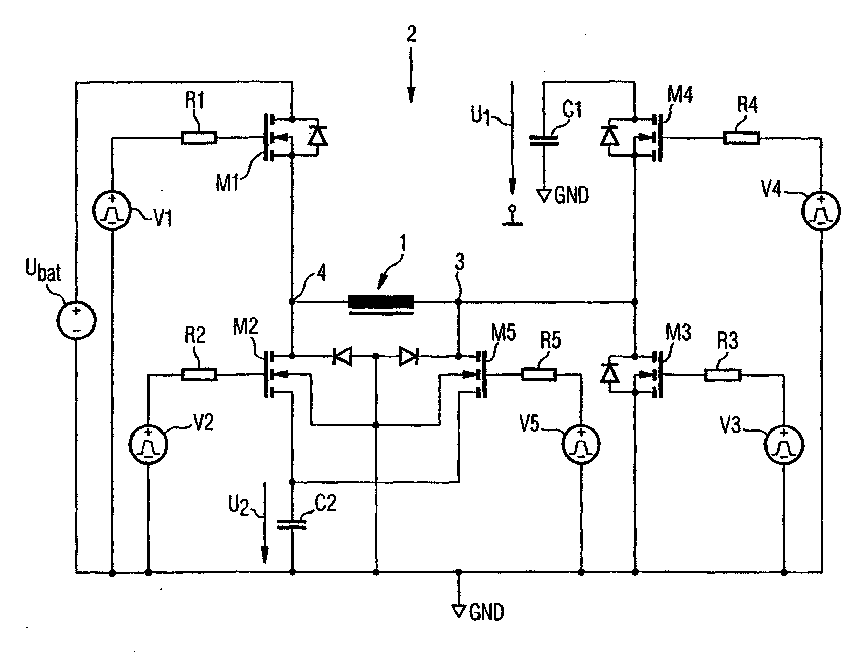

Ein Ausführungsbeispiel der Erfindung ist in der einzigen Figur dargestellt. Diese zeigt das Schaltbild eines erfindungsgemäßen Drosselwandlers, beispielsweise für eine Airbag-Steuerschaltung eines Kraftfahrzeugs, welcher mit einer Versorgungsspannung Ubat = 12V betrieben wird, wobei die beiden Spannungen U1 bzw. U2, beispielsweise U1 = 30V, U2 = 5V, an einem ersten bzw. zweiten Kondensator C1 bzw. C2 abgreifbar sind und im Falle eines Unfalls des Kraftfahrzeugs, wenn die Verbindung von der Fahrzeugbatterie zur Airbag-Steuerschaltung gelöst wird, für eine bestimmte Zeit (einige ms), bis zur Airbag-Auslösung, erhalten bleiben sollen.

Der Drosselwandler weist eine Drossel 1 auf, die in der Diagonale - zwischen zwei Knoten mit den Bezugszeichen 3 und 4 - einer H-Brücken-Topologie 2 angeordnet ist, welche mit einer Versorgungsspannung Ubat betrieben wird. Ein erstes elektronisches Schaltelement M1 ist zwischen einem ersten Knoten 4 und dem Pluspol der Versorgungsspannung Ubat angeordnet. Ein zweites Schaltelement M2 ist in Reihe mit einem zweiten Kondensator C2 zwischen dem ersten Knoten 4 und dem Minuspol GND der Versorgungsspannung Ubat angeordnet. Ein drittes Schaltelement M3 ist zwischen dem zweiten Knoten 3 und dem Minuspol GND angeordnet. Ein viertes Schaltelement M4 in Reihenschaltung mit einem ersten Kondensator C1 ist parallel zum dritten Schaltelement M3 zwischen dem zweiten Knoten 3 und dem Minuspol GND angeordnet. Schließlich ist ein weiteres Schaltelement M5 zwischen dem zweiten Knoten 3 und dem Verbindungspunkt zwischen dem zweiten elektronischen Schaltelement M2 und dem zweiten Kondensator C2 angeordnet. Die Schaltelemente M1 bis M5 werden von Ausgangssignalen einer Steuerelektronik V1 bis V5 gesteuert.

Die elektronischen Schaltelemente M1 bis M5 sind in diesem Ausführungsbeispiel N-Kanal-Feldeffekt-Transistoren vom Anreicherungstyp, welche jeweils eine nicht näher bezeichnete Inversdiode aufweisen, die in Richtung vom Bulk- zum Drain-Anschluß stromleitend sind. Die elektronischen Schaltelemente M1 bis M5 können aber auch beispielsweise Bipolartransistoren sein, mit externen Dioden, wo erforderlich.

Die Source-Anschlüsse des zweiten (M2) und des weiteren Schaltelements M5 sind miteinander verbunden, und deren Bulk-Anschlüsse sind mit dem Minuspol GND verbunden,um Revers-Ströme vom Source- zum Drain-Anschluß zu vermeiden, die auftreten können, wenn die Sourcespannung größer als die Drainspannung ist.

Zum Betreiben des Drosselwandlers als Aufwärtswandler zum Erzeugen einer vorgegebenen, am ersten Kondensator C1 abgreifbaren, ersten Ausgangsspannung U1 werden zuerst das erste und das dritte Schaltelement M1 und M3 leitend gesteuert. Dadurch fließt ein Strom vom Pluspol Ubat über M1, die Drossel 1 und M3 zum Minuspol GND. Dadurch wird die Drossel 1 mit Energie aufgeladen. Zum Übertragen der Drosselenergie auf den ersten Kondensator C1 wird anschließend das dritte Schaltelement M3 nichtleitend gesteuert, wodurch die Drosselenergie in den Kondensator C1 über die Inversdiode des Schaltelements M4 übertragen wird. Dieser Vorgang wird solange wiederholt, bis die erste Ausgangsspannung U1 einen vorgegebenen Wert erreicht, der in der Steuerelektronik V1 bis V5 gespeichert und, in dem Fachmann bekannter Weise, überwacht wird.

Zusätzlich kann während der Übertragung der Energie von der Drossel 1 auf den Kondensator C1 das vierte Schaltelement M4 leitend gesteuert werden, was den Widerstand des Schaltelements verringert.

Ist die Drosselenergie auf den ersten Kondensator C1 übertragen, wird der Vorgang solange wiederholt, bis die erste Ausgangsspannung U1 den vorgegebenen Wert erreicht.Dann wird das bis dahin leitende erste Schaltelement M1 nichtleitend gesteuert.

Eine in der Drossel (1) verbleibende Restladung nach Erreichen der vorgegebenen, ersten Ausgangsspannung U1 kann bei noch leitendem ersten Schaltelement M1 über das weitere Schaltelement M5 in den zweiten Kondensator (C2) geladen werden.

Zum Betreiben des Drosselwandlers als Abwärtswandler zum Erzeugen einer vorgegebenen, am zweiten Kondensator C2 abgreifbaren, zweiten Ausgangsspannung U2 werden das erste und das weitere Schaltelement, M1 und M5, leitend gesteuert. Dadurch wird die Drossel 1 mit Energie und gleichzeitig der Kondensator C2 aufgeladen. Anschließend wird das erste Schaltelement M1 nichtleitend gesteuert. Der Strom fließt dann von der Drossel 1 über das Schaltelement 5 und den zweiten Kondensator C2, der dadurch weiter geladen wird, zum Minuspol GND.

Alternativ dazu können auch zuerst das erste und das dritte Schaltelement, M1 und M3, leitend gesteuert werden und anschließend, wenn die Drossel 1 genügend Energie aufgenommen hat, das dritte Schaltelement M3 nichtleitend und das weitere Schaltelement M5 leitend gesteuert werden. Mit dieser Methode kann auch die zweite Ausgangsspannung U2 größer als die Versorgungsspannung Ubat gemacht werden. Dies kann insbesondere bei kleiner werdender Versorgungsspannung Ubat von Vorteil sein. Außerdem ist dieser Regelvorgang etwas stabiler als der zuvor beschriebene.

Sollen trotz Ausfall der Versorgungsspannung Ubat die beiden Ausgangsspannungen U1 und U2 noch einige Zeit aufrechterhalten werden (Autarkiezeitfall), so wird der erste Kondensator C1 als Energiequelle benutzt. In diesem Fall werden das zweite und vierte Schaltelement M2 und M4 leitend gesteuert. Dabei wird die Drossel 1 mit Energie und gleichzeitig der Kondensator C2 geladen. Wenn dann das Schaltelement M4 nichtleitend gesteuert wird, fließt der Rest der Drosselenergie auf den Kondensator C2 und lädt diesen auf die Spannung U2. Über die Inversdiode des Schaltelements M3 erfolgt die Rückleitung zur Drossel 1. Anschließend wird auch das zweite Schaltelement M2 wieder nichtleitend gesteuert.

Eine Ladung des zweiten Kondensators C2 aus der Versorgungsspannung Ubat als auch aus dem Kondensator C1 wäre auch direkt über M1 - M2 bzw. über M4 - M5 ohne den Umweg über die Drossel 1 denkbar, diese Vorgehensweise führt aber zu hoher Verlustleistung in den Schaltelementen und zu instabilerem Regelverhalten.

Im praktischen Betrieb können die beiden Verfahren zum Betreiben des Drosselwandlers als Aufwärts- und als Abwärtswandler - mit Ausnahme des Autarkiezeitfalles - kontinuierlich alternierend oder in jeder beliebigen Reihenfolge angewandt werden, wodurch die beiden Ausgangsspannungen U1 und U2 miteinander erzeugt und aufrechterhalten werden.

Die Verfahrensschritte zur Steuerung der Schaltelemente M1 bis M5 sind in einem in der Steuerelektronik (V1...V5) abgelegten Programm gespeichert und werden gemäß diesem Programm abgearbeitet.

## Patentansprüche

1. Drosselwandler, mit einer Drossel (1), die in der Diagonale einer H-Brücken-Topologie (2) zwichen einem ersten und zweiten Knoten (4,3) angeordnet ist, welche mit einer Versorgungsspannung (Ubat) betrieben wird,
- mit einem ersten Schaltelement (M1) zwischen dem ersten Knoten (4) und dem Pluspol der Versorgungsspannung (Ubat),
- mit einer Reihenschaltung eines zweiten Schaltelements (M2) und eines zweiten Kondensators (C2) zwischen dem ersten Knoten (4) und dem Minuspol (GND) der Versorgungsspannung (Ubat),
- mit einem dritten Schaltelement (M3) zwischen dem zweiten Knoten (3) und dem Minuspol (GND),
- mit einer Reihenschaltung eines vierten Schaltelements (M4) und eines ersten Kondensators (C1) zwischen dem zweiten Knoten (3) und dem Minuspol (GND),
- mit einem weiteren, zwischen dem zweiten Knoten (3) und dem Verbindungspunkt zwischen dem zweiten elektronischen Schaltelement (M2) und dem zweiten Kondensator (C2) angeordneten Schaltelement (M5), und
- mit einer Steuerelektronik (V1...V5), mittels deren Ausgangssignalen die Schaltelemente (M1...M5) gesteuert werden.

2. Drosselwandler nach Anspruch 1, **dadurch gekennzeichnet, daß** die Schaltelemente (M1...M5) N-Kanal-MOS-FET-Schalter sind, wobei die Source-Anschlüsse des zweiten (M2) und des weiteren Schaltelements (M5) miteinander verbunden sind und deren Bulk-Anschlüsse mit dem Minuspol (GND) verbunden sind.

3. Verfahren zum Betreiben des Drosselwandlers nach Anspruch 1, **dadurch gekennzeichnet, daß** zum Erzeugen einer vorgegebenen, am ersten Kondensator (C1) abgreifbaren, ersten Ausgangsspannung (U1) wenigstens einmal
- zuerst das erste und dritte Schaltelement (M1, M3) leitend gesteuert werden, bis die Drossel (1) mit Energie geladen ist, und
- dann zum Übertragen der Drosselenergie auf den ersten Kondensator (C1) das dritte Schaltelement (M3) nichtleitend gesteuert wird, und
- anschließend das weiterhin leitende erste Schaltelement (M1) nichtleitend gesteuert wird, wenn die Drosselenergie auf den ersten Kondensator (C1) übertragen ist oder der vorgegebene Wert der ersten Ausgangsspannung (U1) erreicht ist.

4. Verfahren nach Anspruch 3, **dadurch gekennzeichnet, daß** während der Übertragung der Energie von der Drossel (1) auf den Kondensator (C1) das vierte Schaltelement leitend gesteuert wird.

5. Verfahren nach Anspruch 3, **dadurch gekennzeichnet, daß** eine in der Drossel (1) verbleibende Restenergie nach Erreichen der vorgegebenen, ersten Ausgangsspannung (U1) über das weitere Schaltelement (M5) in den zweiten Kondensator (C2) geladen wird.

6. Verfahren zum Betreiben des Drosselwandlers nach Anspruch 1, **dadurch gekennzeichnet, daß** zum Erzeugen einer vorgegebenen, am zweiten Kondensator (C2) abgreifbaren, zweiten Ausgangsspannung (U2) wenigstens einmal
- zuerst das erste und das weitere Schaltelement (M1, M5) leitend gesteuert werden, wodurch die Drossel (1) mit Energie und der zweite Kondensator (C2) geladen werden,
- dann das erste Schaltelement (M1) nichtleitend gesteuert wird,
- anschließend der zweite Kondensator (C2) von der Drossel (1) über das noch leitende weitere Schaltelement (M5) geladen wird, bis die Drosselladung auf den zweiten Kondensator (C2) übertragen ist oder der vorgegebene Wert der zweiten Ausgangsspannung (U2) erreicht ist, und dann das weiter Schaltelement (M5) nichtleitend gesteuert wird.

7. Verfahren zum Betreiben des Drosselwandlers nach Anspruch 1, **dadurch gekennzeichnet, daß** zum Erzeugen einer vorgegebenen, am zweiten Kondensator (C2) abgreifbaren, zweiten Ausgangsspannung (U2) wenigstens einmal
- zuerst das erste und das dritte Schaltelement (M1, M3) leitend gesteuert werden, wodurch die Drossel (1) mit Energie geladen wird,
- dann das dritte Schaltelement (M3) nichtleitend und das weitere Schaltelement (M5) leitend gesteuert werden, wodurch der zweite Kondensator (C2) von der Drossel (1) geladen wird, bis die Drosselenergie auf den zweiten Kondensator (C2) übertragen ist oder der vorgegebene Wert der zweiten Ausgangsspannung (U2) erreicht ist, wobei dann das erste und das weitere Schaltelement (M1, M5) nichtleitend gesteuert werden.

8. Verfahren zum Betreiben des Drosselwandlers nach Anspruch 1, **dadurch gekennzeichnet, daß** bei Ausfall der Versorgungsspannung (Ubat) zum Aufrechterhalten der vorgegebenen, zweiten Ausgangsspannung (U2) das zweite und vierte Schaltelement (M2, M4) leitend gesteuert werden, wobei Ladung vom ersten Kondensator (C1) in die Drossel (1) und den zweiten Kondensator (C2) übertragen wird, daß anschließend das vierte Schaltelement (M4) nichtleitend gesteuert wird, wodurch die restliche Drosselenergie in den zweiten Kondensator (C2) geladen wird.

9. Verfahren zum Betreiben des Drosselwandlers nach einem der Ansprüche 3 bis 8, **dadurch gekennzeichnet, daß** die Verfahren zur Erzeugung der ersten und der zweiten Ausgangsspannung (U1, U2) aus der Versorgungsspannung (Ubat) alternierend oder in beliebiger Reihenfolge angewandt werden.

10. Verfahren zum Betreiben des Drosselwandlers nach einem der vorhergehenden Ansprüche, **dadurch gekennzeichnet, daß** die Verfahrensschritte zur Steuerung der Schaltelemente (M1...M5) nach einem in der Steuerelektronik (V1...V5) abgelegten Programm erfolgen.

## Claims

1. Throttle converter, with a throttle (1) arranged in the diagonal of an H-bridge topology (2) between a first and second node (4, 3), which is operated with a supply voltage (Ubat),
- with a first switching element (M1) between the first node (4) and the positive pole of the supply voltage (Ubat),
- with a second switching element (M2) and a second capacitor (C2) connected in series between the first node (4) and the negative pole (GND) of the supply voltage (Ubat),
- with a third switching element (M3) between the second node (3) and the negative pole (GND),
- with a fourth switching element (M4) and a first capacitor (C1) connected in series between the second node (3) and the negative pole (GND),
- with a further switching element (M5) arranged between the second node (3) and the connection point between the second electronic switching element (M2) and the second capacitor (C2), and
- with control electronics (V1 ... V5), the output signals of which are used to control the switching elements (M1 ... M5).

2. Throttle converter according to Claim 1, **characterised in that** the switching elements (M1 ... M5) are N-channel MOS-FET switches, whereby the source connections of the second (M2) and of the further switching element (M5) are connected to one another and their bulk connections are connected to the negative pole (GDN).

3. Method for operating the throttle converter according to Claim 1, **characterised in that** in order to generate a preset first output voltage (U1), which can be picked off on the first capacitor (C1), the following must occur at least once:
- firstly the first and third switching element (M1, M3) are controlled in conductive manner until the throttle (1) is charged with power, and
- the third switching element (M3) is then controlled in non-conductive manner in order to transfer the throttle power to the first capacitor (C1), and
- the still conductive first switching element (M1) is then controlled in non-conductive manner if the throttle power is transferred to the first capacitor (C1) or the preset value of the first output voltage (U1) is reached.

4. Method according to Claim 3, **characterised in that** while the power is being transferred from the throttle (1) to the capacitor (C1) the fourth switching element is controlled in conductive manner.

5. Method according to Claim 3, **characterised in that** any residual power remaining in the throttle (1) is charged on reaching the preset first output voltage (U1) via the further switching element (M5) into the second capacitor (C2).

6. Method for operating the throttle converter according to Claim 1, **characterised in that** in order to generate a preset second output voltage (U2), which can be picked off on the second capacitor (C2), the following must occur at least once:
- firstly the first and the further switching element (M1, M5) are controlled in conductive manner, as a result of which the throttle (1) is charged with power and the second capacitor (C2) is charged,
- then the first switching element (M1) is controlled in non-conductive manner,
- following which the second capacitor (C2) is charged via the still conductive further switching element (M5), until the throttle charging is transferred to the second capacitor (C2) or the preset value of the second output voltage (U2) is reached, and
- the further switching element (M5) is then controlled in non-conductive manner.

7. Method for operating the throttle converter according to Claim 1, **characterised in that** in order to generate a preset second output voltage (U2), which can be picked off on the second capacitor (C2), the following must occur at least once:
- firstly the first and the third switching element (M1, M3) are controlled in conductive manner, as a result of which the throttle (1) is charged with power,
- then the third switching element (M3) is controlled in non-conductive manner and the further switching element (M5) is controlled in conductive manner, as a result of which the second capacitor (C2) is charged from the throttle (1), until the throttle power is transferred to the second capacitor (C2) or the preset value of the second output voltage (U2) is reached, whereby the first and the further switching element (M1, M5) are then controlled in non-conductive manner.

8. Method for operating the throttle converter according to Claim 1, **characterised in that** when the supply voltage (Ubat) for maintaining the preset second output voltage (U2) fails, the second and fourth switching element (M2, M4) are controlled in conductive manner, whereby charge from the first capacitor (C1) is transferred to the throttle (1) and to the second capacitor (C2), and **in that** subsequently the fourth switching element (M4) is controlled in non-conductive manner, as a result of which the remaining throttle power is charged into the second capacitor (C2).

9. Method for operating the throttle converter according to one of Claims 3 to 8, **characterised in that** the methods for generating the first and second output voltage (U1, U2) from the supply voltage (Ubat) are applied alternately or in random sequence.

10. Method for operating the throttle converter according to one of the preceding claims, **characterised in that** the process steps for controlling the switching elements (M1 ... M5) take place in accordance with a program stored in the control electronics (V1 ... V5).

## Revendications

1. Convertisseur à inductance, comportant une inductance (1), qui est disposée entre des premier et deuxième noeuds de circuit (4, 3), suivant la diagonale d'une topologie de pont, lequel fonctionne avec une tension d'alimentation (Ubat),
- comportant un premier élément de commutation (M1) entre le premier noeud (4) et le pôle positif de la tension d'alimentation (Ubat),
- comportant une connexion en série d'un deuxième élément de commutation (M2) et d'un deuxième condensateur (C2) entre le premier noeud (4) et le pôle moins (GND) de la tension d'alimentation (Ubat),
- comportant un troisième élément de commutation (M3) entre le deuxième noeud (3) et le pôle moins (GND),
- comportant une connexion en série d'un quatrième élément de commutation (M4) et d'un premier condensateur (C1) entre le deuxième noeud (3) et le pôle moins (GND),
- comportant un autre élément de commutation (M5) disposé entre le deuxième noeud (3) et le point de liaison entre le deuxième élément de commutation électronique (M2) et le deuxième condensateur (C2), et
- comportant une électronique de commande (V1...V5), au moyen des signaux de sortie de laquelle sont commandés les éléments de commutation (M1...M5).

2. Convertisseur à inductance suivant la revendication 1, **caractérisé en ce que** les éléments de commutation (M1...M5) sont des interrupteurs MOS-FET à canal N, les raccordements de la source du deuxième élément de commutation (M2) et de l'autre élément de commutation (M5) étant reliés entre eux et leurs raccordements de substrat étant reliés au pôle moins (GND).

3. Procédé pour faire fonctionner le convertisseur à inductance suivant la revendication 1, **caractérisé en ce que**, pour produire une première tension de sortie (U1) prédéfinie, pouvant être mesurée sur le premier condensateur (C1), au moins une fois,
- d'abord les premier et troisième éléments de commutation (M1, M3) sont commandés pour être conducteurs, jusqu'à ce que l'inductance (1) soit chargée en énergie, et
- ensuite, pour transmettre l'énergie de l'inductance sur le premier condensateur (C1), le troisième élément de commutation (M3) est commandé pour être non-conducteur, puis
- le premier élément de commutation (M1) continuant à être conducteur, est commandé pour être non-conducteur, quand l'énergie de l'inductance est transférée sur le premier condensateur (C1), ou quand la valeur prédéfinie de la première tension de sortie (U1) est atteinte.

4. Procédé suivant la revendication 3, **caractérisé en ce que**, pendant la transmission de l'énergie de l'inductance (1) au condensateur (C1), le quatrième élément de commutation est commandé pour être conducteur.

5. Procédé suivant la revendication 3, **caractérisé en ce qu'**une énergie restante, demeurant dans l'inductance (1) après que soit atteinte la première tension de sortie (U1), est chargée dans le deuxième condensateur (C2), par l'autre élément de commutation (M5).

6. Procédé pour faire fonctionner le convertisseur à inductance suivant la revendication 1, **caractérisé en ce que**, pour produire une deuxième tension de sortie (U2) prédéfinie, pouvant être mesurée sur le deuxième condensateur (C2), au moins une fois,
- d'abord les premier l'autre éléments de commutation (M1, M5) sont commandés pour être conducteurs, ce qui charge l'inductance (1) en énergie, et charge le deuxième condensateur (C2),
- ensuite le premier élément de commutation (M1) est commandé pour être non-conducteur, puis
- ensuite, le deuxième condensateur (C2) est chargé par l'inductance (1) au moyen de l'autre élément de commutation (M5) encore conducteur, jusqu'à ce que la charge de l'inductance soit transmise au deuxième condensateur (C2), ou que la valeur prédéfinie de la deuxième tension de sortie (U2) soit atteinte, puis
- l'autre élément de commutation (M5) est commandé pour devenir non conducteur.

7. Procédé pour faire fonctionner le convertisseur à inductance suivant la revendication 1, **caractérisé en ce que**, pour produire une deuxième tension de sortie (U2) prédéfinie, pouvant être mesurée sur le deuxième condensateur (C2), au moins une fois,
- d'abord les premier et troisième éléments de commutation (M1, M3) sont commandés pour être conducteurs, ce qui charge l'inductance (1) en énergie,
- ensuite le troisième élément de commutation (M3) est commandé pour être non-conducteur, et l'autre élément (M5) est commandé pour être conducteur, ce qui a pour effet que le deuxième condensateur (C2) est chargé par l'inductance (1), jusqu'à ce que l'énergie de l'inductance soit transmise au deuxième condensateur (C2), ou que la valeur prédéfinie de la deuxième tension de sortie (U2) soit atteinte, les premier et autre éléments de commutation (M1, M5) étant commandés pour être non conducteurs.

8. Procédé pour faire fonctionner le convertisseur à inductance suivant la revendication 1, **caractérisé en ce qu'**en cas de défaillance de la tension d'alimentation (Ubat), pour maintenir la deuxième tension de sortie prédéfinie (U2), les deuxième et quatrième éléments de commutation (M2, M4) sont commandés pour être conducteurs, la charge du premier condensateur (C1) étant transmise dans l'inductance (1) et dans le deuxième condensateur (C2), **en ce qu'**ensuite le quatrième élément de commutation (M4) est commandé pour être non-conducteur, ce qui a pour effet que l'énergie résiduaire de l'inductance est chargée dans le deuxième condensateur (C2).

9. Procédé pour faire fonctionner le convertisseur à inductance suivant l'une des revendications 3 à 8, **caractérisé en ce que**, les procédés de production des première et deuxième tensions de sortie (U1, U2) à partir de la tension d'alimentation (Ubat) sont appliqués alternativement ou dans une succession choisie arbitrairement.

10. Procédé pour faire fonctionner le convertisseur à inductance suivant l'une des revendications précédentes, **caractérisé en ce que** les pas du procédé de commande des éléments de commutation (M1...M5) se succèdent dans un programme enregistré dans l'électronique de commande (V1...V5).
